# EUROPEAN PATENT APPLICATION

(11) **EP 3 029 450 A1**
(43) Date of publication of application: **08.06.2016**
(21) Application number: 15197134.8
(22) Date of filing: 30.11.2015
(51) Int. Cl.: G01N 3/00

(54) **TWIN DISK TESTING APPARATUS**

(30) Priority: 01.12.2014 IT MI20142060
(71) Applicant: Università Degli Studi Di Padova, 35122 Padova (IT)
(72) Inventor: MENEGHETTI, Giovanni, I-31030 Dosson di Casier (TV) (IT); TERRIN, Andrea, I-35122 Padova (IT); GIACOMETTI, Stefano, I-36028 Rossano Veneto (VI) (IT)
(74) Representative: Di Bernardo, Antonio

(57) **Abstract**

The invention relates to an apparatus (1) for testing mechanical strength over time of materials intended for the production of mechanical components, comprising a frame (2) and a supporting base (3) adapted to support a test group (4). The test group (4) comprises a pair of line shafts (5) intended to support each a respective disk (310a, 310b) made of a material to be tested and placed along parallel and coplanar axes of rotation, such that the two disks (310a, 310b) slide and/or roll against one another during the rotation. The apparatus (1) further comprises at least one electric motor (6) connected to a first line shaft (5a) of the pair of line shafts (5) by means of a transmission member (7), so as to apply a rotational motion to the first line shaft (5a). The test group (4) is fixed to a plate (404a) resting on anti-vibration mounts (404b) in turn resting on the supporting base (3).

## Description

### TECHNICAL FIELD

The present invention relates to apparatuses for evaluating tribological properties of materials and particularly an apparatus for testing the mechanical strength over time of materials intended for the production of mechanical components, usually known as test bench of the twin disk type.

In detail the present invention relates to a test apparatus according to the preamble of claim 1.

### PRIOR ART

Twin disk test benches are used for evaluating tribological properties of materials. The possibility of combining a sliding and/or rolling relative motion between contact material surfaces makes these benches particularly useful for analysing the surface mechanical strength of materials intended for the production of components subject to contact pressures cyclically repeated over time, possibly combined with sliding, such as for example cams, bearings, gears, railway wheels. By the same benches it is also possible to carry out comparative tests for evaluating the efficacy of different types of lubricants, surface treatments, surface coatings and paints.

Twin disk test benches comprise a support frame adapted to support, above a supporting base and by a direct fastening, one or more motors, generally electric motors, that cause two parallel and counter-rotating line shafts to rotate, which are also fastened to the supporting base. Each line shaft is fitted with a respective material disk whose tribological properties are to be evaluated. The disks are kept in contact such that they slide and/or roll one on the other. The motor, the line shafts and the disks that lie on the supporting base are exposed to the external environment since have no protection enclosures.

An example of a twin disk test bench is known from R B Van Iperen ET AL: "The application of 1-16 a CVT in a Two Disc Test Machine Contents", 31 August 2006 (2006-08-31).

The inventors have found that twin disk test benches have the drawback of being bulky and not transportable due to the presence of vibrations of the test bench: vibrations are generated both by the motor and by the transmission member, and by the interaction between the test pieces whose contact surfaces get deeply damaged during the operation. Vibrations are transmitted to the frame to which the apparatus is fastened and can nullify the proper evaluation of tribological properties of the tested materials, besides compromising the integrity of the apparatus and further creating inevitable noise problems. This aspect leads to difficulties in installing the test bench, it being necessary to anchor it to the ground and consequently to prepare a space dedicated to the use thereof.

E Zdravecka ET AL: "The wear tribometer 1-16 and digitalization of tribological tests data", Journal of Achievements in Materials and Manufacturing Engineering of Achievements in Materials and Manufacturing Engineering, 1 December 2013 (2013-12-01), pages 321-326, discloses that in order to improve measurements of tribological parameters in a twin disk apparatus it is possible to use loading/damping systems that compensate for the rapid vibrations of the frictional forces that maintain the test pieces in contact.

Such solution, although it is efficacious, however does not allow vibrations resulting from components of the test bench different from the test pieces to be eliminated. Moreover the direct exposure of a working operator to the moving parts of the twin disk test bench has inevitable safety-related risks both during its operation and during the operations for replacing the materials to be tested.

A further drawback of existing twin disk test benches is related to the fact that since they are designed as stationary installations, they often need external oil units for the lubrication and the control of the loading devices, as well as external devices for controlling the operation and the measurement of the test parameters.

### OBJECTS AND SUMMARY OF THE INVENTION

It is the object of the present invention to overcome the drawbacks of the prior art. Particularly it is an object of the present invention to provide a twin disk test bench whose implementation characteristics allow the above drawbacks to be solved in a simple and cheap manner.

In particular it is the object of the present invention to provide a transportable twin disk test bench.

Another object of the present invention is to provide a twin disk test bench easy to be installed.

It is also an object of the present invention to provide a less bulky twin disk test bench.

A further object of the present invention is to provide a twin disk test bench that can be used safely also by an unskilled worker.

These and other objects of the present invention are achieved by an apparatus embodying the characteristics of the annexed claims, which are an integral part of the present description.

The present invention relates to an apparatus for testing mechanical strength over time, comprising a frame and a supporting base intended to support a test group and an electric motor. The supporting base in turn is supported on the frame through an anti-vibration system. The test group comprises a pair of line shafts, each one equipped with a seat intended to support a disk made of a material to be tested.

The disks are rotated by the electric motor that has an output shaft whose motion is transferred to at least one of the two line shafts by a transmission member.

Such solution allows the test bench not to be secured to the ground, since the anti-vibration system absorbs possible induced or intrinsic vibrations of the test group. Thus the test bench becomes easy to be transported and installed.

In one embodiment, the motor is installed under the supporting base, and preferably it is suspended from the test group that supports it.

This solution has the advantage of reducing the horizontal dimensions of the test apparatus.

In one embodiment the transmission has a center distance that lies on a plane substantially orthogonal to the plane containing the axes of rotation of the line shafts. Such solution is particularly compact since allows the motor and the test group to be substantially one under the other one.

In one embodiment the device is composed of an independent unit that groups together main members (motor, shafts and transmission) and auxiliary members (lubrication systems, loading system, control and measurement members) in a single test apparatus.

Such solution provides the advantage of reducing the dimensions and of increasing the compactness of the test bench.

In one embodiment the frame is surrounded by removable panels and the test group is contained by an enclosure supported on the supporting base.

Such solution offers a higher safety for the operator since the access to moving mechanical parts is prevented by the panels and by the enclosure supported on the supporting base.

In one advantageous embodiment, then, the enclosure covering the test group comprises an aperture at the disks supported by the pair of line shafts, on which a transparent cover is hinged. Such transparent cover is movable from a closed position that does not allow the operator to access the disks, to an open position allowing the operator to access the disks. Such solution allows the operator to observe the behavior of the disks when rolling; when he/she has to intervene for mounting or removing the disks, the access is limited to the area of the disks, without the access to other areas of the test apparatus, therefore the replacement can be carried out in a complete safe manner and can be carried out also by unskilled workers.

Further objects and advantages of the present invention will be more clear from the following description and from the annexed claims.

### BRIEF DESCRIPTION OF THE DRAWINGS

The invention will be described below with reference to non-limiting examples, provided by way of example and not as a limitation in the annexed drawings. These drawings show different aspects and embodiments of the invention and, where appropriate, reference numerals showing like structures, components, materials and/or elements in different figures are denoted by like reference numerals.
Figure 1 is an overall view of an apparatus for evaluating mechanical strength over time on contact material surfaces.
Figure 2 is an axonometric view of the motor, the transmission member and the line shafts of the apparatus of figure 1.
Figure 3 is a sectional view of the line shafts of the apparatus of figure 1.
Figure 4 is a top view and a sectional view of the apparatus of figure 1.
Figure 5 is an apparatus for evaluating mechanical strength over time on contact material surfaces according to an embodiment alternative to figure 1.
Figure 6 is a detail of the apparatus of figure 1.
Figure 7 is different disks usable for the tests to be carried out on an apparatus of the type as in figure 1.
Figure 8 is a flow diagram of one embodiment of the disks of figure 7.

### DETAILED DESCRIPTION OF THE INVENTION

While the invention is susceptible of various modifications and alternative forms, some preferred non-limitative embodiments, provided by way of example, are described below in detail. It should be understood, however, that there is no intention to limit the invention to the specific embodiments disclosed, but, on the contrary, the intention of the invention is to cover all modifications, alternative constructions and equivalents falling within the scope of the invention as defined in the claims.

Therefore, in the description below, the use of "for example", "etc", "or" indicates non-exclusive alternatives without limitation unless otherwise defined; the use of "also" means "among which, but not limited to", unless otherwise defined; the use of "include/comprise" means "include/comprise, but not limited to," unless otherwise defined.

The term "disk" refers to a circular-shaped object with parallel flat faces joined together by perimetral surfaces of any shape.

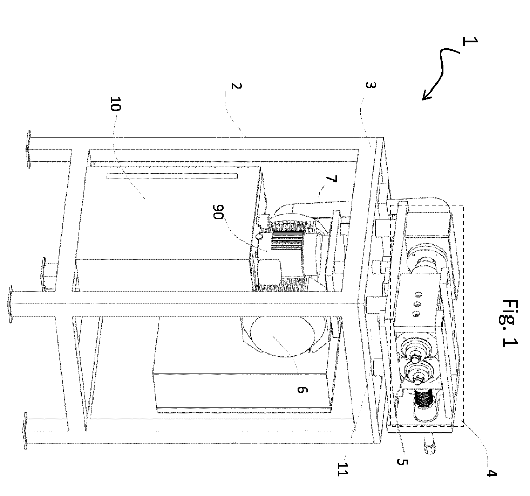

Figure 1 schematically shows an overall view of an apparatus 1 for the tribological characterization of contact surfaces of two test disks made of materials intended for the production of components subject to rolling and/or sliding. The apparatus 1 falls within the group of test apparatuses usually known as test benches of the twin disk type, but it is characterized by a considerable compactness and safety of use.

The apparatus 1 comprises a frame 2 provided with a supporting base 3 adapted to support a test group 4 comprising a pair of line shafts 5. The apparatus further comprises an electric motor 6 coupled to a transmission member 7 with center distance that in the non-limitative example shown in figure 1 is a belt-pulley member.

Such as shown in figure 1, the frame 2 develops along a main vertical direction, such that the electric motor 6 is placed under the supporting base 3.

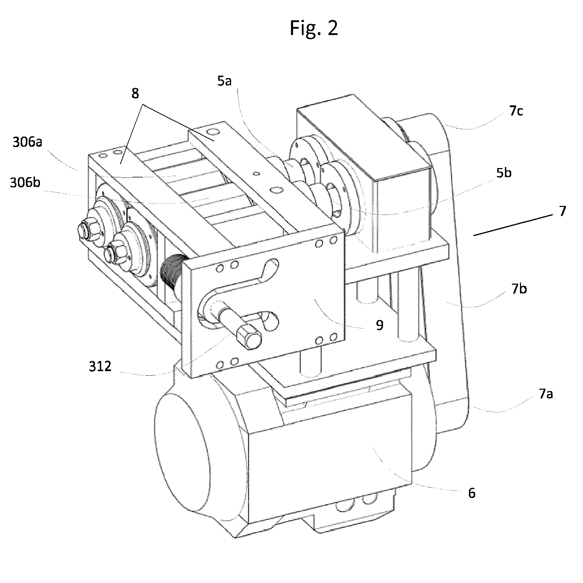

As it can be better seen in figure 2, in use the electric motor 6 generates a rotational motion of an output shaft that drives a driving pulley 7a of the transmission member 7.

A belt 7b is looped over the driving pulley 7a which transfers the rotational motion to a driven pulley 7c which is above the supporting base 3.

The driven pulley 7c is fitted on a first line shaft 5a such that the center distance of the transmission member 7 lies on a plane substantially orthogonal to the axis of the rotational motion generated by the electric motor 6. Thus the electric motor 6 drives and rotates the first line shaft 5a.

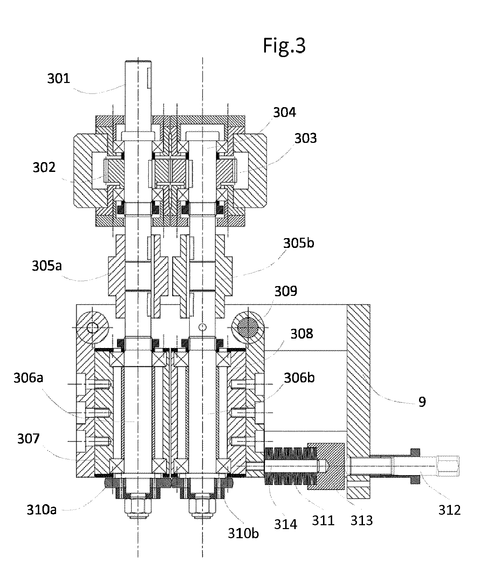

As visible in figure 3, in the example described herein, on the first line shaft 5a a gear wheel 302 is fitted which meshes with a second gear wheel 303, in turn fitted on a second line shaft 5b of the pair of line shafts 5, generating a coupling intended to transfer the rotational motion from the first line shaft 5a to the second line shaft 5b and such that the axes of rotation of said pair of line shafts are parallel, coplanar and counter-rotating.

The axes of rotation of the pair of line shafts 5 further lie on a plane substantially orthogonal to the plane containing the center distance of the transmission member. The first line shaft 5a and the second line shaft 5b comprises each one a first shaft (301, 304) and an elastic joint (305a, 305b) intended to transfer the rotation from the first shaft to a relevant mandrel (306a, 306b).

Downstream of the elastic joints, the mandrel 306a of the first line shaft 5a provides a fixed support 307 while the mandrel 306b of the second line shaft 5b provides a support 308 that can perform small rotations about a pin 309. As it is visible from figure 2, the mandrels (306a, 306b) and their relevant support members are housed in a structure composed of the fixed support 307, at whose upper ends the ends of a pair of crosspieces 8 are fastened which are anchored, at the opposite ends, to a strain gauge load cell 9.

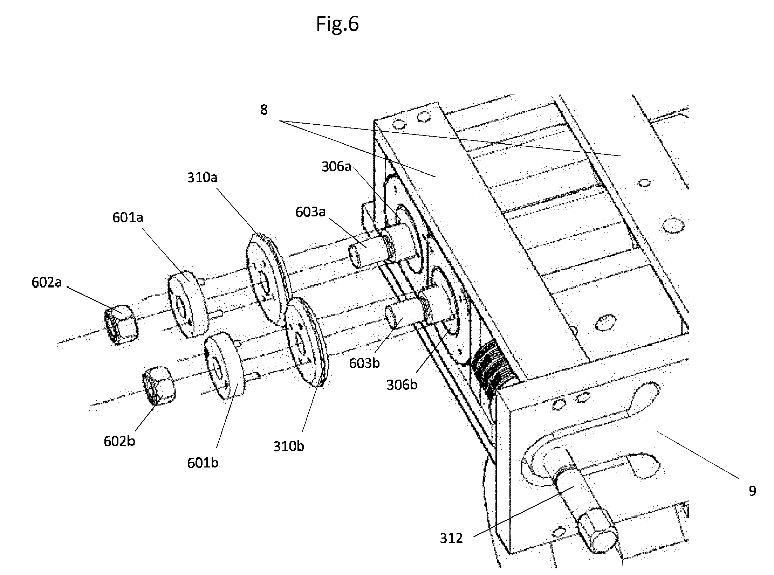

With reference again to figure 3, at the free end of each of the two mandrels (306a, 306b) a relevant disk (310a, 310b) is fitted, which is made of a material to be tested and each one of the two disks is mutually in contact with the other disk. As it is visible from figure 6, the test pieces are radially locked by two front masks (601a, 601b) equipped with a pair of pegs each one inserting in the two disks (310a, 310b) and in the two mandrels (306a, 306b). The disks are then fastened in the axial direction by two nuts (602a, 602b) that are tightened to the free and threaded ends (603a, 603b) of the mandrels.

The apparatus 1 provides to use disks with different geometries each one creating a different tensile condition in the contact area.

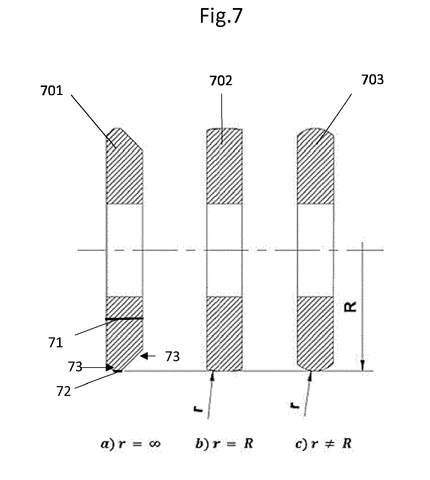

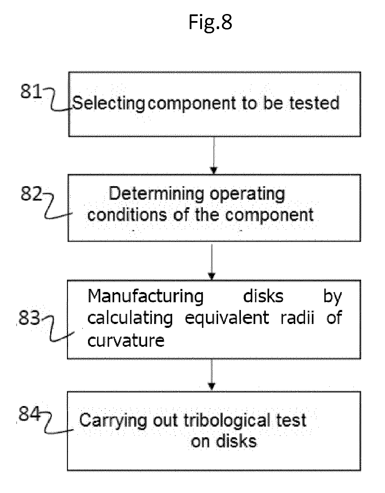

The profile of the disks, some embodiments being shown in figure 7, is obtained by a method whose steps are summarized in the block diagram of figure 8. Such method provides an initial step (step 81) for identifying the mechanical components whose tribological properties are desired to be tested, for example the wheels of a train intended to run on a rail.

Then (step 82) the constructional and operating characteristics to which said components are subject, are determined, such as for example the geometry and the material they are made of, pressure forces affecting their contact surfaces, the sliding and rolling speeds and the type of contact provided during their operation.

On the basis of such information, disks of the materials that will be used in the components are manufactured (wheel and rail in the above example); the profile of the disks is determined by using Hertz theory formula about the contact between elastic solids. Thus (step 83) the radii of curvature are determined, which permit the reproduction on the surface of the disks (310a, 310b) and in the progressive depth of the contact area, of the stress state present in the mechanical components whose behavior is desired to be imitated in the test. Then the disks made in this manner are fitted on the mandrels to perform the test 84.

For example the profile 701 has an infinite radius of curvature (r) thus forming a flat contact band 72 with a reduced width since the corners of the sides 73 are suitably beveled in order to contain the forces necessary to develop a given contact pressure. In this case the contact band is asymmetrically placed on the disk width 71 such to keep the center of thrust close to a bearing of the mandrel where the disk is fitted.

The profile 702, on the contrary, has the radius of curvature (r) of the side of the disk equal to the radius (R) of the disk itself, imitating the tensile condition of two contact spheres.

The most general case is about the profile 703, where the radius of curvature (r) and the radius (R) of the disk have different values.

Moreover since the two mandrels (306a, 306b) rotate at the same angular velocity, when the test operating conditions require sliding speed between the surfaces of the disks (310a, 310b), such sliding speed is obtained by using disks with different diameters.

Turning again to figure 3, a force is applied to the end of the support 308 of the mandrel 306b, through a load regulation screw 312 such that the resultant of the applied force lies on a plane substantially parallel to the plane passing through the centers of the disks (310a, 310b). The load regulation screw 312 is housed into a duct formed in the load cell 9. In particular the load regulation screw 312 pushes on a cap 313, where a stack of disc springs 311 is housed which are arranged along a guide 314 aligned with the load regulation screw 312, whose positioning can be varied and whose compression is regulated by the load regulation screw 312.

Disc springs 311 are in contact with the support 308 such that the regulation of the load regulation screw 312 and the mobility of the support 308 of the mandrel 306b around the pin 309, allow the force applied to the disks (310a, 310b) to be modulated. The presence of springs allow the system stiffness to be reduced, thus avoiding small changes in the center distance of the disks (due for example to the wear of the disk contact surfaces during the test) to cause significant changes of the contact pressure between the disks. The force applied through the load regulation screw 312 is measured by the strain gauge load cell 9.

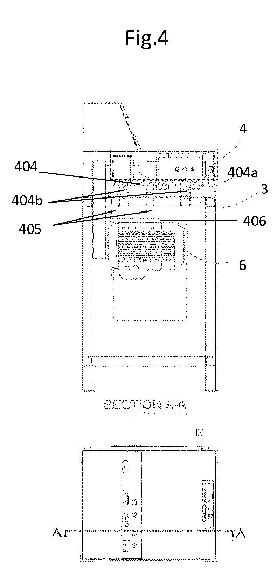

As it is visible in figure 4, the test group 4 is fixed to a plate 404a resting on anti-vibration mounts 404b, that in a preferred embodiment are made of rubber. The anti-vibration mounts 404b rest on the supporting base 3. Threaded rods 405 are fastened to the plate 403, whose ends extend under the supporting base 3 by being fastened to a second plate 406 to which the motor 6 is suspended.

Moreover, as visible in figure 1, the apparatus 1 is provided with a lubrication system that takes oil through a pump 90 from a tank 10 supported by the frame 2 under the supporting base 3. The oil taken from the pump 90 is filtered and sent through lubrication feed lines that reach the test group 4 above the supporting base 3, specifically to gear wheels (302, 303), to the mandrels (306a, 306b) and to the disks (310a, 310b) generating an oil circulating lubrication. Such lubrication involves a continuous oil flow in the lubrication points since oil is collected in a tank 11 placed under the test group 4 and arranged on the supporting base 3, that conveys it to the tank 10, from where the pump 90 in turn causes it to circulate again.

In a preferred embodiment, the lubrication system further provides for a pressure switch and a temperature sensor, not visible in figure 1. The pressure switch is placed at the delivery side of the pump 90 and it is intended to control the shutdown of the apparatus 1 in case of malfunction of the pump 90 or in case of an insufficient oil level in the tank 10 while the temperature sensor, for example a thermocouple, measures oil temperature and is placed under the contact area of the disks (310a, 310b).

The test group 4 is also provided with a proximity sensor, placed at one of the elastic joints (305a, 305b), which measures the number of cycles performed during the test and it controls the apparatus to be automatically stopped upon reaching a predetermined number of cycles.

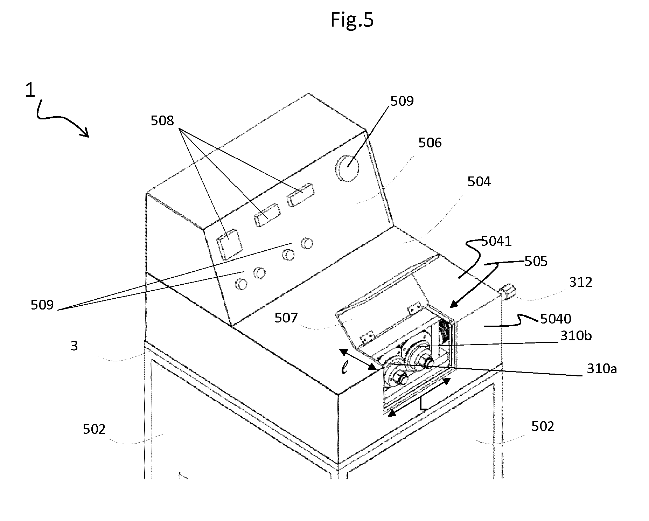

In the preferred example of figure 5, the frame 2 of the apparatus 1 is covered by perimetral panels 502 which are fastened to the frame 2 in a rigid manner. In one embodiment the perimetral panels 502 are removable such to allow the members placed in the frame 2 to be maintained, as an alternative or in combination, in one embodiment one or more of the panels provides an inspection door.

In the example of figure 5 the test group 4 and the driven pulley 7c are enclosed in a casing 504, possibly removable, that in the example of figure 5 rests on the supporting base, but that as an alternative can be rested and/or fixed directly to the frame.

The load regulation screw 312 protrudes from the casing 504 to allow an operator to regulate it from the outside.

The casing 504 has an opening 505 surrounding an area for the access to the disks (310a, 310b) preventing the access to other areas of the test apparatus.

The opening 505 opens on a vertical wall 5040 proximal to the disks 310a and 310b, and on an upper wall 5041 of the casing 504. The opening 504 extends on the proximal wall 5040 for a width L substantially equal to the width of the test group and it extends on the upper surface for a length I equal to the distance between the proximal wall and the area where the disks are fastened to the mandrels.

On one side of the opening 505 of the casing 504 a covering 507 is hinged, which is provided with a handle and is movable from a position closing the opening to an open position that allows limited access to the area of the disks (310a, 310b). The covering 507 is preferably transparent.

In one preferred embodiment the apparatus 1 further comprises means intended to detect the covering 507 being lifted from its closure position. Such means can comprise a proximity sensor or a switch that is kept closed by the covering 507 when it is in such a position to close the opening 504. The means detecting the covering 507 being opened are operatively connected directly or through a control unit, to the motor 6, such to stop the rotation of the line shafts and of disks upon the lifting of the covering 507.

The casing 504 further comprises a control board 506 provided with a display 508 showing values of the parameters measured by the sensors for the load applied by the load regulation screw, temperature and proximity and it is provided with controls 509 for driving and stopping the operation of the apparatus 1.

Therefore it is clear for a person skilled in the art that it is possible to make changes and modifications to the solution described with reference to figures 1, 2, 3, 4, 5 without for this reason departing from the scope of protection of the present patent as defined in the annexed claims.

For example, in one alternative embodiment the apparatus provides to use two electric motors each one driving a shaft of the pair of line shafts. On the contrary in another embodiment the apparatus can provide the line shafts to keep the axes of rotation as parallel, coplanar and counter-rotating but to have the ends of the mandrels on which the disks of the material to be tested are fitted as opposite to each other.

In one embodiment in order to facilitate mounting of the disks 310a, 310b, the casing 504 has a hole where a retaining pin can be inserted, preferably the pin is of the cylindrical type and it has a diameter substantially equal to that of the hole.

The hole opens in one of the two mandrels 306a, 306b which in turn is provided with a seat intended to receive the pin. During the operations for assembling and disassembling the disks 310a, 310b the pin is inserted in the hole present in the casing and pushed down till being received in the seat provided on the mandrel, such to prevent it from rotating.

## Claims

1. Apparatus for testing mechanical strength over time on surfaces of materials intended for the production of mechanical components subject to conditions of rolling and/or mutual sliding contact, comprising:
- a frame (2) comprising a supporting base (3) adapted to support a test group (4),
- the test group comprising a pair of line shafts (5) intended to support each a respective disk (310a, 310b) made of a material to be tested,
- the two line shafts (5) being placed along parallel and coplanar axes of rotation such that the two disks slide and/or roll against one another during the rotation,
- at least one electric motor (6) connected to a first line shaft (5a) of said pair of line shafts (5) by means of a transmission member (7), such to apply a rotational motion to said first line shaft (5a),
**characterized in that** the test group (4) is fixed to a plate (404a) resting on anti-vibration mounts (404b) in turn resting on the supporting base (3).

2. Apparatus according to claim 1, wherein the electric motor (6) is placed under the supporting base (3), and wherein the electric motor (6) is suspended from the plate (404a).

3. Apparatus according to claim 1 or 2, wherein the transmission member (7) is of the type with center distance and provides a center distance disposed in a plane substantially orthogonal to the plane where the axes of rotation of the line shafts (5) lie and to the plane where the axis of the rotational motion applied by the electric motor (6) lies.

4. Apparatus according to claim 1 or 2 or 3, wherein the frame (2) is surrounded by perimetral panels (502).

5. Apparatus according to claim 4, wherein the perimetral panels (502) are removable.

6. Apparatus according to any of the preceding claims, wherein the test group (4) is enclosed by a casing (504).

7. Apparatus according to claim 6, wherein said casing (504) rests on the supporting base (3).

8. Apparatus according to claim 6 or 7, wherein said casing (504) of said test group (4) provides an opening (505) at the disks (310a, 310b) supported by the pair of line shafts (5).

9. Apparatus according to claim 8, wherein the opening (505) opens into a wall (5040) proximal to the disks and into an upper wall (5041) of the casing (504), and it extends on the wall (5040) proximal to the disks for a width substantially equal to the width of the test group and it extends on the upper wall (5041) for a length equal to the distance between the proximal wall and the area fastening the disks to the mandrels.

10. Apparatus according to claim 8 or 9, further comprising a covering (507), preferably transparent, hinged on the casing (504) at the opening (505), such to be movable between a closed position not allowing access from the outside of the apparatus to the disks (310a, 310b) to an open position allowing access to the disks (310a, 310b).

11. Apparatus according to claim 10, further comprising means for detecting the covering (507) being lifted from its closed position, wherein the means for detecting the covering (507) being lifted are operatively connected to the electric motor (6), such to stop the rotation of the pair of line shafts (5) and the disks (310a, 310b) upon the lifting of the covering (507).

12. Apparatus according to any of the preceding claims 6 to 11, wherein the casing (504) has a hole in which a retaining pin can be inserted, wherein the hole opens on one of the two line shafts of said pair of line shafts (5), wherein said one line shaft is provided with a seat adapted to receive the retaining pin, such that during the operations for mounting and removing the disks (310a, 310b), the retaining pin can be inserted into the hole present in the casing and pushed down till being received in the seat provided in said one line shaft, such to prevent it from rotating.

13. Apparatus according to claim 1, wherein the frame (2) supports a lubrication system comprising a pump (90), a tank (10) and lubricant feed lines, and wherein the lubrication system preferably further comprises a pressure switch and a temperature sensor.

14. Apparatus according to any of the preceding claims, wherein the frame (2) supports a force load system comprising a load regulation screw (312) connected to a strain gauge load cell (9), wherein said load regulation screw (312) is adapted to apply a force to a support (308) of a mandrel (306b), such that the resultant of the applied force lies on a plane substantially parallel to the plane passing through the centers of the disks (310a, 310b).

15. Apparatus according to any of the preceding claims, further comprising manual and/or automatic integrated controls (509) for starting and stopping the test and for adjusting the speed.

16. Apparatus according to any of the preceding claims, further comprising a display (508) for monitoring the test parameters of the apparatus, specifically oil temperature, applied load, rotational speed, number of cycles performed.
